# EUROPEAN PATENT APPLICATION

(11) **EP 2 960 036 A1**
(43) Date of publication of application: **30.12.2015**
(21) Application number: 14174163.7
(22) Date of filing: 26.06.2014
(51) Int. Cl.: B29C 43/36, B29C 33/00

(54) **Method and device for embossing/pressing**

(71) Applicant: TCTech Sweden AB, 374 35 Karlshamn (SE)
(72) Inventor: Jäderberg, Jan, SE-16347 Spånga (SE)
(74) Representative: Larsson, Malin

(57) **Abstract**

The present disclosure relates to an embossing or pressing system and method where a plastic blank may be embossed during a production cycle between a first (1) and a second (3) tool half in order to provide the blank with a desired shape or a desired surface pattern. A sealing device (11), is used which connects the first and second tool halves, during a step in the production cycle when a blank is inserted between the tool halves but prior to pressing, in such a way that a closed space is formed between the tool halves. A pumping device (15, 17, 25), is adapted to lower the pressure in said closed space in order to remove air from the cavity. This mitigates the risk of air pockets being trapped between each of the tool halves and the blank when pressing/embossing takes place.

## Description

### Technical field

The present diclosure relates to an embossing/pressing system and method where first and second tool halves are used, and between active surfaces of which a plastic blank is embossed or pressed during a production cycle, in order to provide the blank with a desired shape or a desired surface pattern.

### Background

Such a device is diclosed e.g. in WO-2013/002703-A1 where the tool halves are heated during the pressing. One problem associated with such procedures is that air can be trapped between an active surface and the blank. This may under adverse circumstances lead to a defect in the finished product which leads to reduced overall yield.

### Summary

One object of the present disclosure is therefore to provide an improved device and method with better yield. This object is achieved by means of a device as defined in claim 1, and a method as defined in claim 8.

More specifically, in a device of the initially mentioned kind there is provided a sealing device, which surrounds the active surfaces, and the device is adapted to connect, during a step when a blank is inserted between the tool halves but prior to pressing in the production cycle, the first and second tool halves in such a way that a closed space is formed between the tool halves, and a suction device, which is adapted to remove air from the closed space. This device and a corresponding method is capable of removing air from in between the blank and a tool half to a great extent, which leads to an improved yield by mitigating defects in the finished product.

The suction device may comprise a first vacuum accumulator, a first pump arranged to lower the pressure in the first vacuum accumulator and a first valve, which is adapted to connect the first vacuum accumulator to the closed space during a part of the production cycle in order to equalize the pressure in the closed space and the first vacuum accumulator. This provides a more efficient removal of air as the pump may be active during as much as the entire production cycle. The volume of the first vacuum accumulator may be a factor 5 or more times greater than the volume of the closed space.

A second vacuum accumulator may be used together with a pump arranged to lower the pressure in the second vacuum accumulator and a second valve, which is adapted to temporarily connect the second vacuum accumulator to the closed space in order to equalize the pressure in the closed space and the second vacuum accumulator after the first valve is closed. This lowers the pressure in the closed space even further. In the same way a third vacuum accumulator may be provided.

The sealing device may be an inflatable o-ring, which surrounds the active surfaces of the tool halves.

### Brief description of the drawings

Fig 1 illustrates schematically an embossing system where a tool is in an open phase.
Fig 2 shows the tool of the system in fig 1 in a prepared state phase.
Fig 3 shows the tool of the system in fig 1 in a sealed state phase.
Fig 4 shows the tool of the system in fig 1 in the embossing phase.
Fig 5 shows the tool of the system in fig 1 again in the open phase.
Fig 6 shows a flow chart corresponding to the phases depicted in figs 1-5.
Fig 7 illustrates an evacuation system with three vacuum accumulators.

### Detailed description

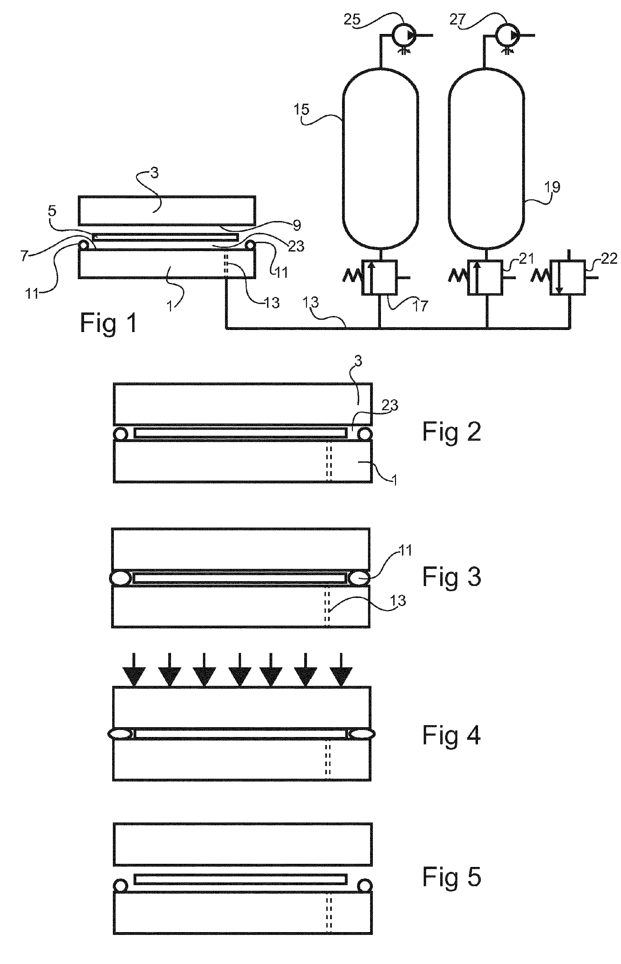

Fig 1 illustrates schematically an embossing/pressing system where a tool is in an open phase. The tool has two halves 1,3, and a blank 5 is inserted between the halves to be embossed or pressed.

During a phase of the production cycle, the blank 5 will be pressed between the halves 1,3 and optionally, the halves may be actively heated during that phase to wholly or partially melt the blank or at least to make the blank deform plastically more easily.

The embossing replicates patterns disposed on either or both active surfaces 7, 9 of the halves, i.e. the surfaces that come into contact with the blank during the pressing. In combination with, or alternatively to this pattern replication, the blank may also be bent if the active surfaces are not planar.

One example of a product that can be produced in this way is a lightguide plate that is used in a flat screen TV. A flat or slightly wedge-shaped rectangular and transparent blank is embossed with a fine pattern over one of its flat surfaces to form the lightguide plate. When one edge of the finished plate is lighted by means e.g. of light emitting diodes, LEDs, the plate conveys the introduced light by total reflection, but light leaks out of the plate evenly and in a predetermined fashion over one of its surfaces, thanks to the embossed pattern, to backlight e.g. an LCD display.

In order to make the production cycle quicker, the tool halves may also be actively cooled, e.g. by a fluid medium, once the pattern has been replicated and/or the blank 5 has been bent.

The tool halves may generally be designed as described in WO-2013/002703-A1 where coils are used to inductively heat the active surfaces during one part of the cycle, and the tool halves are cooled by means of a fluid cooling medium during another part of the cycle.

In the system according to the present disclosure, a sealing device 11 is provided that allows the inner space 23, between the tool halves, to be sealed off from the ambient space. This sealing device may be provided as an inflatable o-ring that surrounds the active surfaces. The o-ring may be glued to one of the tool halves. When inflated it will seal against the other tool half, which may optionally be provided e.g. with a groove that receives the o-ring when inflated. Other conceivable sealing devices however exist.

A conduit 13 is provided that connects the inner space 23 to a suction device including a first vacuum accumulator 15 via a valve 17. Optionally, a second vacuum accumulator 19 and a second valve 21 may be provided. A first pump 25 lowers the pressure in the first vacuum accumulator 15, and a second pump 27 lowers the pressure in the second vacuum accumulator 19.

By means of the first vacuum accumulator 15, the pressure in the inner space 23 can be lowered during a part of the production cycle before embossing takes place. This mitigates to a great extent the problem with pockets of air being trapped between the surface of a blank and an active surface of a tool halve. Such air pockets may disturb e.g. the replication of a pattern on a blank during embossing and consequently reduces the yield of the overall process as some finished products may not meet quality requirements.

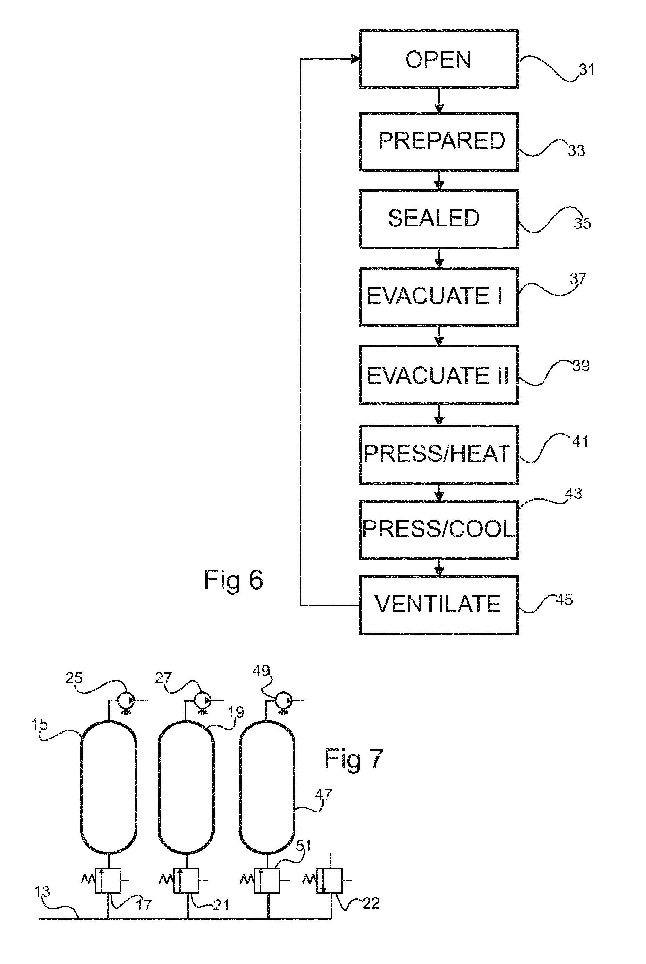

Fig 6 shows a flow chart corresponding to an example of a production cycle where a blank is embossed. Phases of this production cycle are illustrated in fig 1 and in figs 2-5. In fig 1, the embossing system is in an open state (cf. 31, fig 6), which means that a finished product can be removed and that a new blank 5 can be introduced between the tool halves 1, 3.

Then, the tool halves may optionally be moved closer to each other into a prepared state 33 as illustrated in fig 2, in order to facilitate the sealing of the inner space 23 between the tool halves 1, 3.

Next, the inner space 23 is sealed 35, by the sealing means 11. As illustrated in fig 3, this may be done by inflating an o-ring that surrounds the active surfaces. The o-ring may be attached to one of the tool halves, and may, when inflated seal against a surface of the other tool half. Optionally, the other tool half may be provided with specific sealing details such as e.g. a groove in which the inflated o-ring may seat. Silicone rubber may be one suitable material for the o-ring.

As the inner space 23 is now closed, air therein may be evacuated, in a first evacuating step 37, through the conduit 13. This may be done by opening the first valve 17 of fig 1, such that the inner space 23 becomes connected to the first vacuum accumulator 15. This vacuum accumulator 15 may have a volume that is e.g. at least five, and typically ten times greater than the approximate volume of the inner space 23, and may be evacuated, by means of the first pump 25 throughout the production cycle, such that a pressure of about 10 kPa (-0.9 bar) is achieved in the accumulator before the first valve 17 is opened. The pressure in the first vacuum accumulator 15 and the inner space 23 now becomes equalized, and this takes place very quickly as compared to a case where the air would be pumped out of the inner space without the use of the vacuum accumulator 15. Still, as the first pump can operate throughout a production cycle, a significant amount of air can be removed. The first valve 17 is then closed.

In an optional second evacuating step 39, the second valve 21 is opened once the first valve 17 has been closed, such that the inner space 23 is connected to the second vacuum accumulator 19. The second vacuum accumulator 19 may be configured in the same way as the first vacuum accumulator 15, although this is not necessary. When connected to the second vacuum accumulator 19, the inner space's pressure drops even further, e.g. to as much as 1 kPa. The second valve 21 may then be closed but may also remain open until pressing/embossing has been carried out.

With the pressure considerably lowered, embossing may now take place by applying mechanical pressure on the blank as illustrated in fig 4. This may be done in two steps, a first pressing/heating step 41 where a pressure is applied between the tool halves, e.g. 3 MPa, and the active surfaces of the tools are heated, and a second pressing/cooling step 43 where the pressure is still applied and the active surfaces are cooled. The pressure applied need not be constant during these steps.

At this point, the blank is finished, and air is again let into the closed space, in a ventilating step 45, by means of a valve 22 (cf. fig 1). The o-ring may then be relaxed.

Finally, the tool halves 3, 5 are separated such that the system reverts to the open state 31 as again illustrated in fig 5, such that the embossed blank can be removed.

It is possible to use a third evacuating step (not shown in fig 6) applied in the same way as, and immediately after, the second evacuating step 39. If so, a third vacuum accumulator 47 may be used as shown in fig 7. This accumulator may have its own pump 49 and a valve 51 that is opened after closing the valve of the second vacuum accumulator.

The present disclosure is not limited to the emodiments described above, which may be altered and varied in different ways within the scope of the appended claims. For instance, the sealing system could be placed outside the space between the two halves. Also, other suction arrangements are possible. For instance, it would be possible to omit the vacuum accumulator and connect the valve directly to a pump, even if this would imply a slower production cycle.

## Claims

1. An embossing/pressing system comprising a first (1) and a second (3) tool half each having an active surface, between which a plastic blank may be embossed during a production cycle in order to provide the blank with a desired shape or a desired surface pattern, **characterized by**:
- a sealing device (11), surrounding said active surfaces, which is adapted to connect, during a step when a blank is inserted between the tool halves but prior to pressing in the production cycle, the first and second tool halves in such a way that a closed space is formed between the tool halves, and
- a suction device (15, 17, 25), which is adapted to remove air from the cavity.

2. An embossing/pressing system according to claim 1, wherein the suction device comprises a first vacuum accumulator (15), a first pump (25) arranged to lower the pressure in the first vacuum accumulator and a first valve (17), which is adapted to connect the first vacuum accumulator to the closed space during a part of the production cycle in order to equalize the pressure in the closed space and the first vacuum accumulator.

3. An embossing/pressing system according to claim 2, wherein said pump (25) operates continuously during the production cycle.

4. An embossing/pressing system according to claim 2 or 3, wherein the volume of the first vacuum accumulator is at least a factor 5 times greater than the volume of the closed space.

5. An embossing/pressing system according to any of claims 2-4,
wherein the pumping device comprises a second vacuum accumulator (19), a second pump (27) arranged to lower the pressure in the second vacuum accumulator and a second valve (21), which is adapted to temporarily connect the second vacuum accumulator to the closed space in order to equalize the pressure in the closed space and the second vacuum accumulator after the first valve is closed.

6. An embossing/pressing system according to claim 5, further comprising a third vacuum accumulator (47), a third pump (49) and a third valve (51), which is adapted to connect the third vacuum accumulator to the closed space when the second valve has closed.

7. An embossing/pressing system according to any of the preceding claims, wherein the sealing device is an inflatable o-ring (11) surrounding the active surfaces of the tool halves.

8. A production method including embossing or pressing of a plastic blank between a first (1) and a second (3) tool half during a production cycle in order to provide the blank with a desired shape or a desired surface pattern, **characterized by**:
- sealing (35) a space including the space occupied by the blank in between the tool halves when the blank is inserted between the tool halves but prior to pressing in the production cycle, in order to form a closed space is between the tool halves, and
- lowering (37, 39) the pressure in said closed space in order to remove air from the closed space.

9. A production method according to claim 8, wherein the lowering of the pressure involves connecting a first vacuum accumulator to the closed space during a part of the production cycle in order to equalize the pressure in the closed space and the first vacuum accumulator.

10. A production method according to claim 9, wherein the lowering of the pressure further involves disconnecting the first vacuum accumulator from the closed space during a part of the production cycle, and subsequently connecting a second vacuum accumulator to the closed space.
